# EUROPÄISCHE PATENTSCHRIFT

(11) **EP 3 757 494 B1**
(45) Veröffentlichungstag und Bekanntmachung des Hinweises auf die Patenterteilung: **03.05.2023**
(21) Anmeldenummer: 20180877.1
(22) Anmeldetag: 18.06.2020
(51) Int. Cl.: F26B 3/06, F26B 21/04, F26B 21/08, F26B 23/00

(54) **TROCKNUNGSSYSTEM UND TROCKNUNGSVERFAHREN**
DRYING SYSTEM AND DRYING METHOD
SYSTÈME DE SÉCHAGE ET PROCÉDÉ DE SÉCHAGE

(30) Priorität: 24.06.2019 DE 102019116898
(43) Veröffentlichungstag der Anmeldung: 30.12.2020
(73) Patentinhaber: LASCO Heutechnik GmbH, 5221 Lochen (AT)
(72) Erfinder: Landrichinger, Johannes, 5221 Lochen (AT); Landrichinger, Werner, 5221 Lochen (AT); Oitner, Herbert, 5221 Lochen (AT)
(74) Vertreter: Heyerhoff Geiger & Partner Patentanwälte PartGmbB

(56) Entgegenhaltungen:
- EP-A1- 0 523 684
- EP-A1- 1 593 921
- EP-A1- 3 184 946

## Beschreibung

Die vorliegende Erfindung betrifft ein Trocknungssystem und ein Trocknungsverfahren zum Trocknen von Trocknungsgut, insbesondere Pflanzenfasern.

Trocknungsgut, zum Beispiel Pflanzenfasern wie Heu oder Stroh, kann auf verschiedene Weisen getrocknet werden. So war es z.B. lange Zeit üblich, Heu nach dem Schneiden auf einer Wiese bis zum gewünschten Trocknungsgrad in der Sonne liegen zu lassen. Heute ist es auch bekannt, Heu aktiv zu trocknen, zum Beispiel indem entfeuchtete und/oder warme Luft durch einen auf einem Lüftungsboden angeordneten Heuhaufen geblasen wird. Die das Heu durchströmende Luft kann dabei Feuchtigkeit aus dem Heu aufnehmen, bis ein ausreichender Trocknungsgrad erreicht ist.

Trocknungssysteme zum Trocknen von Trocknungsgut weisen üblicherweise zwei Aggregate auf: einen Ventilator zum Erzeugen eines Luftstroms und einen Luftentfeuchter zum Entfeuchten des Luftstroms. Der Ventilator drückt oder saugt feuchte, gegebenenfalls warme Luft durch den Luftentfeuchter, welche durch ein Kühlregister des Luftentfeuchters auf eine Temperatur unterhalb des Taupunkts abgekühlt wird. Dabei kondensierende Flüssigkeit kann abgeführt werden. Die kühle, nun trockene Luft wird in der Regel anschließend in einem Heizregister des Luftentfeuchters erwärmt, um einen größeren Teil Feuchtigkeit aufnehmen zu können, und durch das Trocknungsgut geblasen.

Aus EP 3 184 946 A1 ist eine Vorrichtung zum Trocknen von feuchtem Material bekannt, die eine Trockenkammer, eine Waschsäule, eine Wärmepumpe und einen Heizkörper aufweist. Der Heizkörper kann mit der Wärmepumpe über einen Wärmespeicher gekoppelt sein.

Aus EP 1 593 921 A1 ist eine Vorrichtung zum Trocknen von Holz bekannt, bei der ein Wärmekreislauf ohne Zwischenschaltung eines Wärmespeichers direkt auf eine Luftheizeinrichtung arbeiten kann.

Es ist eine Aufgabe der Erfindung, die Trocknung von Trocknungsgut weiter zu verbessern, insbesondere in der Anfangsphase der Trocknung.

Diese Aufgabe wird gelöst durch ein Trocknungssystem und ein Trocknungsverfahren zum Trocknen von Trocknungsgut, zweckmäßigerweise pflanzliches Material, insbesondere Pflanzenfasern, gemäß den unabhängigen Ansprüchen.

Ein Trocknungssystem zum Trocknen von Trocknungsgut, insbesondere Pflanzenfasern, gemäß dem ersten Aspekt der Erfindung weist einen Ventilator zur Erzeugung eines Luftstroms, der dem Trocknungsgut zur Trocknung zuführbar ist, und einen Luftentfeuchter zum Entfeuchten des Luftstroms auf. Erfindungsgemäß ist ein Wärmespeicher sowie eine mit dem Wärmespeicher gekoppelte Wärmeeinrichtung vorgesehen, wobei die Wärmeeinrichtung dazu eingerichtet ist, den entfeuchteten Luftstrom mit aus dem Wärmespeicher entnommener Wärme, insbesondere zumindest zeitweise, zu erwärmen.

Ein Luftentfeuchter im Sinne der Erfindung ist insbesondere eine Vorrichtung, die dazu eingerichtet ist, einen Luftstrom abzukühlen, insbesondere auf eine Temperatur unter den Taupunkt der im Luftstrom enthaltenen Luft, und bei der Abkühlung kondensierende Feuchtigkeit abzuführen. Vorzugsweise weist der Luftentfeuchter zu diesem Zweck ein Kühlregister auf, welches einen Kühlmittelkreislauf umfassen oder mit einem solchen verbunden sein kann. Das Kühlmittel aus dem Kreislauf nimmt vorzugsweise Wärme aus dem zu entfeuchtenden Luftstrom auf und verdampft insbesondere dabei. Nach der Wärmeaufnahme kann das Kühlmittel insbesondere komprimiert werden, wobei es unter Wärmeabgabe in einem Kondensator abkühlen, insbesondere kondensiert werden kann. Es kann so wieder zur Aufnahme von Wärme aus dem Luftstrom bereitstehen.

Der Luftentfeuchter kann auch dazu eingerichtet sein, den Luftstrom nach der Entfeuchtung wieder zu erwärmen, zum Beispiel auf die Ausgangstemperatur oder eine Arbeitstemperatur. Zu diesem Zweck weist der Luftentfeuchter vorzugsweise ein Heizregister auf, das ebenfalls den Kühlmittelkreislauf umfassen oder mit diesem verbunden sein kann. Das Heizregister kann insbesondere dazu eingerichtet sein, dem Luftstrom vom Kühlmittel abgegebene Wärme zuzuführen.

Ein Wärmespeicher kann eine Vorrichtung mit einem insbesondere mit Flüssigkeit gefüllten Wärmereservoir und einer thermischen Isolierung um das Wärmereservoir sein, sodass dieses nach außen thermisch isoliert ist. Hierbei bewirkt die Isolierung zweckmäßigerweise eine Reduzierung der aus dem Wärmereservoir durch die Isolierung abgeführten Wärme um zumindest 75 %, insbesondere um mindestens 90 %. Die Vorrichtung kann dazu eingerichtet sein, ihr zugeführte Wärme in Form von Wärme- bzw. thermischer Energie zumindest für einen vorgegebenen Zeitraum, zum Beispiel mindestens 5 Stunden, vorzugsweise mindestens 15 Stunden, insbesondere mindestens 24 Stunden, nahezu verlustfrei zu speichern. Ein Wärmespeicher kann im vorliegenden Fall daher auch als Pufferspeicher bezeichnet werden. Vorzugsweise ist der Wärmespeicher auch dazu eingerichtet, zumindest einen Teil der in ihm gespeicherten Wärme bei Bedarf wieder abzugeben, z.B. an eine mit dem Wärmespeicher gekoppelte Wärmeeinrichtung.

Eine Kopplung des Wärmespeichers mit der Wärmeeinrichtung im Sinne der Erfindung ist insbesondere eine wärmeleitende Verbindung zwischen dem Wärmespeicher und der Wärmeeinrichtung, wobei Wärme aus dem Wärmespeicher über die wärmeleitende Verbindung an der Wärmeeinrichtung bereitgestellt werden kann, z.B. indem warmes Wasser aus dem Wärmespeicher zur bzw. durch die Wärmeeinrichtung gepumpt wird.

Ein Aspekt der Erfindung basiert auf dem Ansatz, zur Erwärmung von Luft, die in ein Trocknungsgut, insbesondere landwirtschaftliche Güter wie z.B. Heu, Stroh, Mais und/oder dergleichen, zum Trocknen desselben geblasen werden soll, mit thermischer Energie aus einem Wärmespeicher zu erwärmen. Zum Beispiel kann ein erzeugter Luftstrom durch dem Wärmespeicher entnommene Wärme auf eine Arbeitstemperatur, insbesondere auf eine Trocknungstemperatur, bei der das Trocknungsgut getrocknet wird, erwärmt werden. Die Erwärmung der Luft unter Verwendung der Wärme aus dem Wärmespeicher kann dabei sogar an die Stelle einer konventionellen Erwärmung der Luft durch ein Heizregister eines Luftentfeuchters treten oder aber zusätzlich vorgesehen sein. Auch das Zuführen der Wärme aus dem Wärmespeicher durch das Heizregister ist vorteilhaft und möglich.

Allerdings ist die Verwendung des Wärmespeichers auch deshalb vorteilhaft, da eine maximale Heizleistung des Heizregisters üblicherweise durch die kurzfristig verfügbare Energie zum Betrieb des Trocknungssystems, insbesondere des Luftentfeuchters, begrenzt ist. Beispielsweise kann die Heizleistung des Luftentfeuchters und damit auch des Heizregisters durch die Belastbarkeit eines Stromnetzes, durch welches der Luftentfeuchter mit Energie versorgt wird, begrenzt sein, so dass der Luftstrom nicht bis auf die gewünschte Trocknungstemperatur erwärmbar ist. Oder die Heizleistung des Heizregisters des Luftentfeuchters ist konstruktionsbedingt begrenzt. Diese oder jene Begrenzung der Heizleistung kann durch Vorsehen eines Wärmespeichers umgangen werden.

Insbesondere kann die zum Erreichen einer hohen Heizleistung benötigte thermische Energie leicht über einen längeren Zeitraum in dem Energiespeicher deponiert werden, um dann zum benötigten Zeitpunkt, d. h. der Trocknung von Trocknungsgut, abgerufen zu werden. Zweckmäßigerweise wird die thermische Energie vom Luftentfeuchter bereitgestellt. Der Luftentfeuchter kann also den Wärmespeicher heizen, auch ohne dass das Trocknungsgut getrocknet wird. Die dadurch zur Verfügung stehende Wärmeenergie kann später dann zum Trocknen des Trocknungsguts verwendet werden. Beispielsweise wird der Luftentfeuchter vor einem Heuschnitt angeschaltet, beispielsweise am Abend vorher, und heizt den Wärmespeicher auf, beispielsweise über Nacht und am Vormittag. Wenn dann später, zum Beispiel ab dem Nachmittag, das Heu in die Scheune eingefahren wird, kann es mit einer Heizleistung getrocknet werden, die die Heizleistung übersteigt, die der Luftentfeuchter alleine zu erreichen imstande ist.

Mithilfe des Wärmespeichers lassen sich daher besonders hohe Heiz- und damit auch besonders hohe Trocknungsleistungen erzielen. Zudem lassen sich auf diese Weise auch regenerative Energiequellen, die z.B. tageszeit- oder wetterabhängig Energie liefern und/oder nur verhältnismäßig geringe Leistung bereitstellen, etwa Photovoltaikmodule, zumindest mittelbar zur Erwärmung des Luftstroms verwenden.

Die Temperatur des zum Trocknen eingesetzten Luftstroms kann in bevorzugter Weise selektiv, d. h. in ausgewählten Zeiträumen, durch Wärme aus dem Wärmespeicher erwärmt werden. Es ist zum Beispiel denkbar, den Luftstrom insbesondere in einer Anfangsphase der Trocknung mit aus dem Wärmespeicher entnommener Wärme, insbesondere zusätzlich, zu erwärmen. Dies erlaubt eine besonders effiziente Trocknung des in der Anfangsphase üblicherweise relativ feuchten Trocknungsguts.

Mit anderen Worten kann der Wärmespeicher als Puffer dienen, mit dem Zeiträume, in denen besonders hohe Heiz- bzw. Trocknungsleistungen erforderlich sind, überbrückt werden können.

Dadurch wird es insbesondere möglich, einen Ventilator zur Erzeugung des Luftstroms und den Luftentfeuchter dauerhaft optimal zu betreiben. Zum Beispiel kann trotz einer Begrenzung der zum Betrieb des Trocknungssystems verfügbare elektrischen Leistung eine Erhöhung der Luftentfeuchterleistung - durch Erhöhung der Wärmeleistung - erzielt werden, ohne dass beispielswiese die Ventilatorleistung reduziert wird.

Nachfolgend werden bevorzugte Ausführungsformen der Erfindung und deren Weiterbildungen beschrieben, die jeweils, soweit dies nicht ausdrücklich ausgeschlossen wird, beliebig miteinander sowie mit den im Weiteren beschriebenen Aspekten der Erfindung kombiniert werden können.

Erfindungsgemäß ist das Trocknungssystem dazu eingerichtet, dem Luftstrom beim Entfeuchten entzogene Wärme in einem ersten Betriebsmodus, insbesondere zumindest teilweise, dem Wärmespeicher zuzuführen. Die Wärme kann dem Wärmespeicher dabei insbesondere durch eine Kopplung des Kühlregisters des Luftentfeuchters mit dem Wärmespeicher zugeführt werden. Beispielsweise ist es denkbar, einen Kondensator des Kühlmittelkreislaufs des Luftentfeuchters, an dem das heiße, komprimierte Kühlmittel unter Wärmeabgabe kondensiert, an den Wärmespeicher zu koppeln. Dadurch kann das Trocknungssystem z.B. auch in Zeiten, in denen die dem Luftstrom beim Entfeuchten entzogene Wärme nicht unmittelbar zur Wiedererwärmung des entfeuchteten Luftstroms benötigt wird, zum Beispiel weil das Trocknungsgut einen gewünschten Trocknungsgrad nahezu erreicht hat oder noch gar kein Trocknungsgut zum Trocknen bereitsteht, vorteilhaft betrieben werden, um den Wärmespeicher zu laden.

Der erste Betriebsmodus kann ein Aufladen des Wärmespeichers mit thermischer Energie umfassen. Beispielsweise kann ein Landwirt das Trocknungssystem morgens oder bereits am Abend vor dem Trocknungstag in den ersten Betriebsmodus versetzen, bevor er feuchtes bzw. nur teilweise getrocknetes Heu von seinen Wiesen einfährt. Wenn abends dann ein Heuspeicher, insbesondere eine Trocknungskammer, zum Beispiel in einer Scheune, in der das Trocknungssystem installiert ist, befüllt ist, steht im Wärmespeicher ausreichend thermische Energie zur Verfügung, um den zum Trocknen eingesetzten Luftstrom gerade in der Anfangsphase des Trocknungsprozesses zusätzlich zu erwärmen und so den Trocknungsprozess signifikant zu beschleunigen.

Das Trocknungsgut kann insofern mit Wärme aus dem Wärmespeicher getrocknet werden. Hierbei ist es vorteilhaft, wenn zur Trocknung zusätzlich Wärme aus dem zeitgleich stattfindenden Trocknungsprozess der Luft im Luftentfeuchter verwendet wird.

Erfindungsgemäß ist das Trocknungssystem insofern dazu eingerichtet, den Luftstrom mit beim Entfeuchten entzogener Wärme in einem zweiten Betriebsmodus direkt und zusätzlich zur Erwärmung durch dem Wärmespeicher entnommener Wärme zu erwärmen. Insbesondere kann der Luftentfeuchter ein Heizregister aufweisen, an welchem im zweiten Betriebsmodus mit dem Luftstrom beim Entfeuchten entzogene Wärme bereitgestellt wird. Dies erlaubt es, den Luftstrom durch die im Wärmespeicher gespeicherte thermische Energie zusätzlich zu erwärmen. Dadurch können besonders hohe Temperaturen des Luftstroms zum Trocknen des Trocknungsguts, insbesondere in einer Anfangsphase des Trocknungsprozesses, erzielt werden.

Der Betrieb des Trocknungssystems im zweiten Betriebsmodus in Kombination mit dem Wärmespeicher erlaubt es dabei insbesondere, die technische Limitierung des Luftentfeuchters mit Heizregister in Bezug auf eine maximale Erwärmung der entfeuchteten Luft zu überwinden. Beispielsweise beträgt ein Temperaturunterschied zwischen feuchter, dem Entfeuchter zugeführter Luft und trockener, durch das Heizregister des Luftentfeuchters mithilfe der dem Luftstrom beim Entfeuchten entzogenen Wärme erwärmter Luft maximal 15°C. Der Temperaturunterschied kann durch zusätzliche Erwärmung im zweiten Betriebsmodus leicht überschritten werden. Wenn zum Beispiel von einer Temperatur der zu entfeuchtenden Luft von etwa 10°C ausgegangen wird, ist es mithilfe des Wärmespeichers leicht möglich, den entfeuchteten, zur Trocknung vorgesehenen Luftstrom auf 30°C oder mehr zu erwärmen.

In einer weiteren bevorzugten Ausführungsform ist die Wärmeeinrichtung als Heizregister des Luftentfeuchters ausgebildet oder zumindest Teil des Heizregisters. Ein Heizregister im Sinne der Erfindung ist insbesondere eine Einrichtung des Luftentfeuchters, die dazu eingerichtet ist, den entfeuchteten Luftstrom mithilfe von Wärme, die dem Luftstrom beim Entfeuchten entzogen wird, unmittelbar wieder zu erwärmen. In der vorliegend beschriebenen Ausführungsform ist das Heizregister zusätzlich dazu eingerichtet, den Luftstrom, insbesondere selektiv, d. h. zumindest zeitweise, zusätzlich durch dem Wärmespeicher entnommene Wärme zu erwärmen. Dadurch kann der Aufbau des Trocknungssystems vereinfacht werden. Insbesondere ist es somit möglich, das Trocknungssystem besonders platzsparend auszubilden, sodass es leichter auf begrenztem Raum, zum Beispiel in kleinen Technikräumen einer Scheune oder sogar in einem, gegebenenfalls transportablen, Container installiert werden kann.

In einer weiteren bevorzugten Ausführungsform ist die Wärmeeinrichtung zusätzlich zu einem Heizregister des Luftentfeuchters vorgesehen. Vorzugsweise ist die Wärmeeinrichtung dabei stromabwärts des Heizregisters angeordnet. Dadurch kann der durch das Heizregister vorgewärmte Luftstrom leicht durch die Wärmeeinrichtung weiter erwärmt werden. Die separate Ausbildung von Heizregister und Wärmeeinrichtung hat außerdem den Vorteil, dass sie technisch leichter zu realisieren ist. Beispielsweise kann die Wärmeeinrichtung als Warmwasserregister ausgebildet sein, welches, insbesondere im zweiten Betriebsmodus, unabhängig vom Heizregister des Luftentfeuchters betrieben werden kann. Es ist somit nicht notwendig, ein Heizregister mit einem komplexen Aufbau vorzusehen, der die Erwärmung des Luftstroms sowohl durch unmittelbar dem Luftstrom beim Entfeuchten entzogener Wärme als auch durch dem Wärmespeicher entnommener Wärme ermöglicht. Dadurch können nicht nur bei der Produktion, sondern auch bei der Wartung Zeit und Kosten gespart werden.

In einer weiteren bevorzugten Ausführungsform ist die Wärmeeinrichtung dazu eingerichtet, den durch das Heizregister vorgewärmten Luftstrom auf mindestens 10°C, insbesondere mindestens 20°C, vorzugsweise mindestens 30°C zu erwärmen. Insbesondere kann die Wärmeeinrichtung dazu eingerichtet sein, den durch das Heizregister vorgewärmten Luftstrom zusätzlich um mindestens 5°C, insbesondere mindestens 10°C, zu erwärmen. Dadurch kann die Trocknungsleistung des Trocknungssystems signifikant gesteigert werden, insbesondere in einer Anfangsphase des Trocknungsprozesses.

In einer weiteren bevorzugten Ausführungsform ist die Wärmeeinrichtung, insbesondere unmittelbar, stromaufwärts des Ventilators angeordnet. Vorzugsweise sind die Wärmeeinrichtung und der Ventilator integral ausgebildet bzw. bilden eine Struktur. Insbesondere kann die Wärmeeinrichtung direkt auf den Ventilator montiert sein und/oder Teil des Ventilators sein. Dies hat den Vorteil eines besonders kurzen Weges für den erwärmten Luftstrom. Somit kann die Effizienz des Trocknungssystems erhöht werden, da auf dem Weg zwischen Wärmeeinrichtung und Ventilator weniger Wärmeverluste auftreten können.

Die Anordnung des Ventilators stromabwärts der Wärmeeinrichtung hat außerdem den Vorteil, dass die Wärmeeinrichtung vor Abnutzung geschützt werden kann. Insbesondere kann somit vermieden werden, dass die beispielsweise durch Staub oder andere kleine Teilchen verunreinigte Luft mit hoher Geschwindigkeit durch die Wärmeeinrichtung geblasen wird, was, zumindest über einen längeren Zeitraum, zu einer Abrasion der Wärmeeinrichtung und damit zu deren Verschleiß führen würde.

In einer weiteren bevorzugten Ausführungsform weist das Trocknungssystem ein Luftleitungssystem auf, das dazu eingerichtet ist, die Luft aus dem von der Wärmeeinrichtung erwärmten Luftstrom dem Luftentfeuchter zuzuführen. Insbesondere kann das Trocknungssystem dazu eingerichtet sein, insbesondere im zweiten Betriebsmodus, mittels des Luftleitungssystems einen zumindest im Wesentlichen geschlossenen Luftkreislauf zu erzeugen. Mit anderen Worten kann dem Luftentfeuchter Luft aus der Trocknungskammer zugeführt werden. Dies ist insbesondere bei niedrigen Außentemperaturen vorteilhaft, wenn der Außenluft außerhalb der Trocknungskammer nur eine geringe Wärmemenge entzogen und z.B. dem Speicher zugeführt werden kann.

Der von der Wärmeeinrichtung ab- und den Luftentfeuchter anströmende Luftstrom kann mithilfe des Luftleitungssystems insbesondere durch eine Trocknungskammer geführt werden, die mit dem Trocknungsgut befüllbar ist. Das Trocknungssystem ist vorzugsweise dazu eingerichtet, den Luftstrom dabei nicht nur im zweiten Betriebsmodus, d.h. beim Trocknen des Trocknungsguts, sondern auch im ersten Betriebsmodus, d. h. beim Laden des Wärmespeichers, durch die Trocknungskammer zur führen. Auch hierbei kann der Luftstrom zumindest teilweise erwärmt werden, zum Beispiel indem nur ein Teil der dem Luftstrom beim Entfeuchten entzogenen Wärme dem Wärmespeicher zugeführt und ein anderer Teil dem Luftstrom zugeführt wird, vorzugsweise über ein Heizregister des Luftentfeuchters. Dadurch kann die Temperatur in der Trocknungskammer im ersten Betriebsmodus erhöht werden, auch wenn noch kein Trocknungsgut in der Trocknungskammer vorhanden ist. Somit kann das Trocknungsgut in eine vorgewärmte Trocknungskammer eingebracht werden, wodurch die anschließende Trocknung des Trocknungsguts, insbesondere in einer Anfangsphase, erleichtert werden kann.

In einer weiteren bevorzugten Ausführungsform weist das Trocknungssystem eine Trocknungskammer, insbesondere für pflanzliches Material, wie Pflanzenfasern, und ein Luftleitungssystem auf. Das Luftleitungssystem ist dabei vorzugsweise dazu eingerichtet, den Luftstrom selektiv, d. h. zeitweise, in die Trocknungskammer einzuleiten und zu anderen Zeiten an der Trocknungskammer vorbei zu leiten. Vorzugsweise weist das Luftleitungssystem zu diesem Zweck wenigstens einen umschaltbaren Luftkanal auf. Insbesondere kann das Luftleitungssystem dazu eingerichtet sein, den Luftstrom im ersten Betriebsmodus derart zu leiten, dass die nach dem Entfeuchten nicht oder nur schwach erwärmte Luft des Luftstroms nicht in die Trocknungskammer eintritt. Beispielsweise kann der Luftstrom mithilfe des Luftleitungssystems nach außen oder zumindest in einen Technikraum, in dem der Luftentfeuchter, der Ventilator und/oder der Wärmespeicher angeordnet sind, abgeblasen werden. Dies ist insbesondere vorteilhaft, wenn sich bereits Trocknungsgut in der Trocknungskammer befindet und/oder wenn die beim Entfeuchten abgekühlte Luft eine geringere Temperatur als die Raumtemperatur in der Trocknungskammer aufweist, da in diesem Fall eine Abkühlung des Trocknungsguts und/oder der Trocknungskammer vermieden werden kann.

Alternativ oder zusätzlich kann das Luftleitungssystem dazu eingerichtet sein, den Luftstrom im zweiten Betriebsmodus in die Trocknungskammer einzuleiten, z.B. um Trocknungsgut in der Trocknungskammer zu trocknen. Das Luftleitungssystem kann insbesondere dazu eingerichtet sein, den Luftstrom in Abhängigkeit von einer Lufttemperatur, Luftfeuchte, Temperatur des Trocknungsguts und/oder Restfeuchte des Trocknungsguts zu leiten, d. h. in die Trocknungskammer einzuleiten oder nicht.

In einer weiteren bevorzugten Ausführungsform weist das Trocknungssystem eine Steuerungseinrichtung auf, die dazu eingerichtet ist, den Luftentfeuchter und/oder die Wärmeeinrichtung in Abhängigkeit von einer Lufttemperatur, einer Luftfeuchte und/oder einer Restfeuchte des Trocknungsguts zu betreiben. Dabei ist die Steuerungseinrichtung in bevorzugter Weise auch dazu eingerichtet, das Luftleitungssystem zum Beispiel eine Luftweiche oder Verschlussklappen, zu steuern. Es ist zum Beispiel denkbar, dass die Steuerungseinrichtung den Luftentfeuchter und/oder die Wärmeeinrichtung in Abhängigkeit einer Temperatur der Außenluft bzw. einer Außentemperatur, insbesondere der dem Luftentfeuchter zugeführten Luft, einer Luftfeuchte der Außenluft, der Witterung bzw. dem Wetter, eine Uhr- bzw. Tageszeit, einer Raumtemperatur der Trocknungskammer bzw. einer Temperatur des Trocknungsguts, einer Luftfeuchte in der Trocknungskammer, einer Restfeuchte des Trocknungsguts und/oder dergleichen betreibt bzw. den Luftstrom in Abhängigkeit davon führt. Dadurch kann der Trocknungsprozess und/oder die Aufladung des Wärmespeichers besonders effizient durchgeführt werden.

Dabei kann die Steuerungseinrichtung dazu eingerichtet sein, in einem dritten Betriebsmodus des Trocknungssystems den Luftentfeuchter und/oder die Wärmeeinrichtung außer Betrieb zu nehmen, z.B. abzuschalten, und/oder den Luftstrom in die Trocknungskammer einzuleiten. Beispielsweise kann bei gutem Wetter, d. h. hohen Temperaturen und geringer Luftfeuchte, eine Entfeuchtung und anschließende Erwärmung des Luftstroms zur Trocknung des Trocknungsgut überflüssig sein, sodass in diesem Fall durch Wechsel in den dritten Betriebsmodus Energie und damit verbundene Kosten gespart werden können. Zum Beispiel kann die Steuerungseinrichtung einen Wechsel des Trocknungssystems in den dritten Betriebsmodus veranlassen, wenn die Außentemperatur 20°C erreicht oder überschreitet und/oder die Luftfeuchte der Außenluft 45 % erreicht oder unterschreitet.

In einer weiteren bevorzugten Ausführung ist der Wärmespeicher als ein Warmwasserspeicher ausgebildet. Dies ist vorteilhaft, da Wasser eine hohe Wärmekapazität hat. Ein weiterer Vorteil kann in diesem Zusammenhang erzielt werden, wenn die Wärmeeinrichtung, insbesondere das Wärmeregister, als Warmwasserregister ausgebildet ist. In diesem Fall ist das Trocknungssystem in bevorzugter Weise dazu eingerichtet, erwärmtes Wasser aus dem Warmwasserspeicher zu entnehmen und durch das Warmwasserregister zu leiten, z.B. mithilfe einer Pumpe. Dies erlaubt eine besonders effiziente Nutzung der im Wärmespeicher gespeicherten thermischen Energie.

In einer weiteren bevorzugten Ausführungsform ist die Wärmeeinrichtung dazu eingerichtet, den durch das Heizregister vorgeheizten Luftstrom auf mindestens 10°C, vorzugsweise mindestens 20°C, insbesondere mindestens 30°C zu erwärmen. Mit anderen Worten kann das Trocknungssystem, insbesondere im zweiten Betriebsmodus, dazu eingerichtet sein, die Temperatur des zum Trocknen bereitgestellten Luftstroms zu überwachen und gegebenenfalls, falls die Temperatur einen vorgegebenen Temperaturschwellenwert, z.B. 20°C, insbesondere 30°C, erreicht oder unterschreitet, eine zusätzliche Nacherwärmung mithilfe der Wärmeeinrichtung und aus dem Wärmespeicher entnommener Wärme auszuführen, d. h. die Wärmeeinrichtung in Betrieb zu nehmen. Zu diesem Zweck kann das Trocknungssystem eine stromabwärts der Wärmeeinrichtung, insbesondere des Ventilators, angeordnete Sensoreinrichtung, welche insbesondere einen Temperatursensor umfasst, aufweisen. Auf Grundlage von durch die Sensoreinrichtung bereitgestellten Sensordaten kann das Trocknungssystem, z.B. mittels der Steuerungseinrichtung, die Wärmeeinrichtung entsprechend steuern. Dadurch kann eine zuverlässige Trocknung sichergestellt werden.

In einer weiteren bevorzugten Ausführungsform ist der Wärmespeicher dazu eingerichtet, gespeicherte Wärme an ein Heizungssystem zum Heizen von Räumen bzw. Gebäuden abzugeben. Beispielsweise kann der Wärmespeicher eine Anschlusseinrichtung aufweisen, mit welcher er an ein Heizungssystem anschließbar ist. Dadurch kann die im Wärmespeicher gespeicherte thermischer Energie besonders flexibel genutzt werden.

Zum Beispiel kann auf einem Hof das Heizungssystem wenigstens eine Gebäudes, etwa eines Bauernhauses oder eines Stalls, an den Wärmespeicher angeschlossen werden. Auf diese Weise kann das Trocknungssystem zum Heizen des entsprechenden Gebäudes oder zumindest zur Heizunterstützung verwendet werden. Mit anderen Worten ist es denkbar, den Luftentfeuchter als Wärmepumpe mit zwischengeschaltetem Wärmepuffer - dem Wärmespeicher - zu verwenden. Dies ist insbesondere vorteilhaft, wenn zum Beispiel die gespeicherte thermische Energie nicht oder zumindest nicht vollständig zum Trocknen des Trocknungsguts verwendet wurde.

Bei der Verwendung des Trocknungssystems zur Prozesswärmeerzeugung bzw. Gebäudeheizung kann das Problem auftreten, dass die Wärme auch bei Außentemperaturen nahe 0°C benötigt wird. Allerdings kann ein üblicher Luftentfeuchter nur bei Temperaturen deutlich über 0°C arbeiten, da sonst das Kühlregister und/oder der Kondensator einfriert und der Betrieb des Luftentfeuchters somit zum Erliegen kommt. Um einen vereisten Luftentfeuchter enteisen zu können, ist es vorteilhaft, die in den Luftentfeuchter eintretende Luft vorwärmen zu können. Dazu kann ein zusätzliches Heizregister vorhanden sein, das luftstromaufwärts des Luftentfeuchters angeordnet ist, oder - wenn das zusätzliche Heizregister Teil des Luftentfeuchters ist - das luftstromaufwärts eines Kälteregisters des Luftentfeuchters angeordnet ist. Das zusätzliche Heizregister erwärmt die in den Luftentfeuchter eintretende Luft und der Luftentfeuchter kann enteist und dann weiterbetrieben werden.

Die Wärmezufuhr zur zusätzlichen Wärmeeinrichtung erfolgt zweckmäßigerweise aus dem Wärmespeicher. Hierzu kann ein Wärmemittelkreislauf zwischen dem Wärmespeicher und dem zusätzlichen Heizregister vorgesehen sein.

Vorzugsweise ist das Trocknungssystem, zumindest der Luftentfeuchter, der Wärmespeicher und/oder der Ventilator, in einem transportablen Gehäuse, zum Beispiel in einem Container, montiert. Das transportable Gehäuse weist in bevorzugter Weise Luftleitungs- und/oder Heizungsanschlüsse auf, mit denen das Trocknungssystem oder zumindest die im transportablen Gehäuse angeordneten Komponenten in bestehende Infrastruktur integrierbar ist bzw. sind. Zum Beispiel kann das transportable Gehäuse mithilfe der Luftleitungsanschlüsse an eine Trocknungskammer, beispielsweise in Form einer Scheune, und/oder mithilfe der Heizungsanschlüsse an ein Heizungssystem wenigstens eines Gebäudes angeschlossen werden. Durch die Transportabilität und die Möglichkeit des Anschlusses an ein Heizungssystem ist das Trocknungssystem zum Beispiel auch zu Bautrocknung geeignet. Der Wärmespeicher bzw. die in ihm gespeicherte thermischer Energie ermöglicht es hierbei, die Gebäudetrocknung sofort mit hoher Leistung zu beginnen.

Ein Trocknungsverfahren gemäß einem zweiten Aspekt der Erfindung weist die Schritte auf: (i) Erzeugen eines Luftstroms durch einen Ventilator; und (ii) Entfeuchten des Luftstroms mit einem Luftentfeuchter und dabei Erzeugen von Wärme. Erfindungsgemäß wird (iii) die Wärme in einem Wärmespeicher gespeichert und (iv) die Wärme aus dem Wärmespeicher (6) entnommen und als Prozesswärme einem Erwärmungsprozess zugeführt.

Die Prozesswärme kann vorteilhafterweise zum Erwärmen von entfeuchteter Luft aus dem Luftentfeuchter verwendet werden, wobei der Erwärmungsprozess das Trocknen des Trocknungsguts ist. Das Verfahren kann dann ein Verfahren zum Trocknen von Trocknungsgut, insbesondere pflanzliches Material, wie Pflanzenfasern, sein.

Es ist jedoch auch möglich, die Prozesswärme zum Heizen eines Gebäudes zu verwenden, beispielsweise eine Wohnhauses, eines Stalls oder eines anderen technischen Raums. Der Erwärmungsprozess kann insofern das Erwärmen eines Gebäudes und/oder einer technischen Anlage sein.

Die in Bezug auf den ersten Aspekt der Erfindung und dessen vorteilhafte Ausgestaltung beschriebenen Merkmale und Vorteile können auch für den zweiten Aspekt der Erfindung und dessen vorteilhafte Ausgestaltung verwendet werden sowie umgekehrt.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale wird der Fachmann jedoch zweckmäßigerweise auch einzeln betrachten und zu sinnvollen weiteren Kombinationen zusammenfassen. Insbesondere sind diese Merkmale jeweils einzeln und in beliebiger geeigneter Kombination mit dem erfindungsgemäßen Verfahren und der erfindungsgemäßen Vorrichtung gemäß den unabhängigen Ansprüchen kombinierbar.

Weitere Merkmale, Vorteile und Anwendungsmöglichkeiten der Erfindung ergeben sich aus der nachfolgenden Beschreibung im Zusammenhang mit den Figuren, in denen durchgängig dieselben Bezugszeichen für dieselben oder einander entsprechende Elemente der Erfindung verwendet werden. Es zeigen wenigstens teilweise schematisch:
- FIG 1: ein Beispiel eines Trocknungssystems; und
- FIG 2: ein Beispiel eines Trocknungsverfahrens.

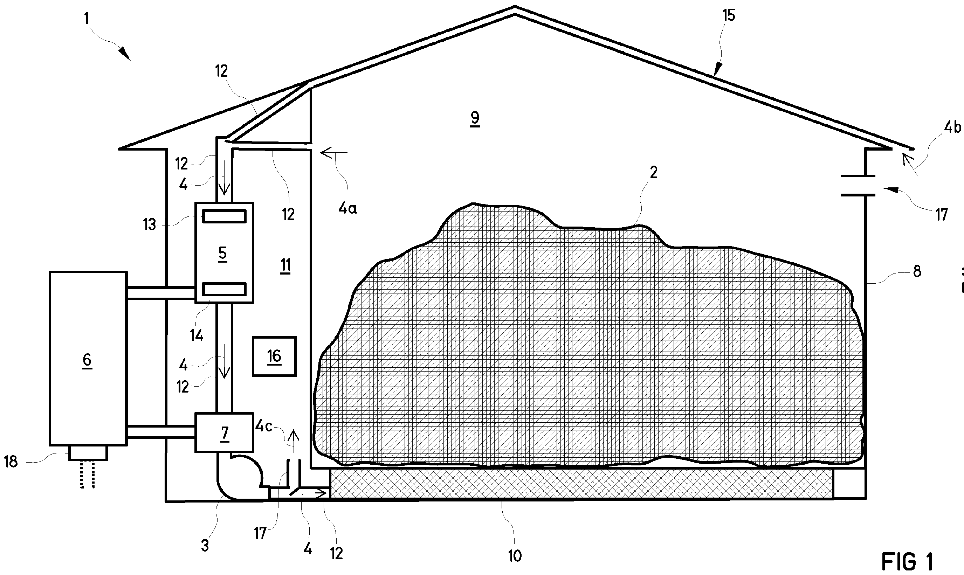

FIG 1 zeigt ein Beispiel eines Trocknungssystems 1 zum Trocknen von Trocknungsgut 2 und/oder einem Gebäude, wobei das Trocknungssystem 1 einen Ventilator 3 zum Erzeugen eines durch Pfeile angedeuteten Luftstroms 4, einen Luftentfeuchter 5 zum Entfeuchten des Luftstroms 4, einen Wärmespeicher 6 zum Speichern thermischer Energie und eine Wärmeeinrichtung 7 zum Erwärmen des Luftstroms 4 aufweist. Der Luftentfeuchter 5 und die Wärmeeinrichtung 7 sind im gezeigten Beispiel stromaufwärts des Ventilators 3 angeordnet, sodass die Luft durch den Luftentfeuchter 5 und die Wärmeeinrichtung 7 gesaugt wird. Alternativ ist es jedoch auch möglich, die Wärmeeinrichtung 7 und/oder den Luftentfeuchter 5 stromabwärts des Ventilators 3 anzuordnen, sodass die Luft durch die Wärmeeinrichtung 7 und/oder den Luftentfeuchter 5 geblasen wird.

Im gezeigten Beispiel handelt es sich bei dem Trocknungsgut 2 um Pflanzenfasern, insbesondere Heu, die in einem Gebäude 8, beispielsweise einer Scheune, gelagert sind. Die Scheune ist unterteilt in eine Trocknungskammer 9 zur Aufnahme des Trocknungsguts 2 und einen Technikraum 11, in dem im vorliegenden Beispiel der Luftentfeuchter 5, die Wärmeeinrichtung 7 und der Ventilator 3 angeordnet sind.

Der Luftentfeuchter 5, die Wärmeeinrichtung 7 und die Trocknungskammer 9 sind über ein Luftleitungssystem aus mehreren Luftkanälen 12 miteinander verbunden. Dadurch kann Luft 4a z.B. aus der Trocknungskammer 9 zunächst durch den Luftentfeuchter 5 gesaugt werden, der die Luft durch Abkühlung unter den Taupunkt entfeuchtet bzw. trocknet. Dazu weist der Luftentfeuchter 5 ein Kühlregister 13 auf. Das Kühlregister 13 kann einen Kondensator aufweisen, in dem die aus der Luft abgeschiedene Feuchtigkeit abgeführt wird.

Beim Entfeuchten wird der Luft aus dem Luftstrom 4 thermische Energie entzogen, zum Beispiel indem ein durch das Kühlregister 13 geführtes Kühlmittel verdampft wird. Die dadurch vom verdampften Kühlmittel aufgenommene Wärme wird vorzugsweise in einem ersten Betriebsmodus des Trocknungssystems 1, in dem der Wärmespeicher mit thermischer Energie beladen wird, an den Wärmespeicher 6 abgegeben, wo sie dann zur Verwendung zu einem späteren Zeitpunkt bereitsteht. Das Trocknungssystem 1 kann beispielsweise vor dem Einbringen des Trocknungsguts 2 in die Scheune 8, etwa am Tag vor der Ernte, im ersten Betriebsmodus betrieben werden, um den Wärmespeicher 6 aufzuladen.

Alternativ oder zusätzlich zur Abführung der dem Luftstrom 4 entnommenen Wärme an die Wärmeeinrichtung 6 kann die entfeuchtete Luft auch von einem Heizregister 14 des Luftentfeuchters 5 mithilfe der dem Luftstrom 4 beim Abkühlen entzogenen Wärme wieder aufgeheizt werden. Dies kann im ersten Betriebsmodus geschehen, beispielsweise in dem ein Teil der Wärme dem Wärmespeicher 6 und ein anderer Teil dem Heizregister 14 zugeführt wird. Dies kann aber auch in einem zweiten Betriebsmodus geschehen, in dem das Trocknungssystem 1 betreibbar ist, in dem zumindest im Wesentlichen die gesamte Wärme aus dem Kühlregister 13 dem Heizregister zugeführt wird.

Die durch den Luftentfeuchter 5 gesaugte und dabei entfeuchtete, im zweiten Betriebsmodus auch vorgeheizte Luft tritt anschließend in die direkt am Ventilator 3 angeordnete Wärmeeinrichtung 7, zum Beispiel ein Warmwasserregister, ein, die sie mithilfe von aus dem Wärmespeicher 6 entnommener Wärme, vorzugsweise zusätzlich, aufwärmt. Der Ventilator 3 bläst die derart getrocknete, warme Luft durch einen Lüftungsboden 10 in das Trocknungsgut 2.

Im ersten Betriebsmodus ist die Wärmeeinrichtung 7 dagegen vorzugsweise außer Betrieb genommen, um ein effizientes Aufladen des Wärmespeichers 6 zu ermöglichen. Sollte dabei bereits Trocknungsgut 2 in der Scheune 8 eingelagert sein, kann die entfeuchtete, kalte Luft 4c auch in den Technikraum 11 oder vorzugsweise direkt nach außerhalb des Gebäudes 8 abgeblasen werden, was in FIG 1 der Übersichtlichkeit halber nicht dargestellt ist. Zu diesem Zweck weist das Luftleitungssystem einen stromabwärts des Ventilators 3 angeordneten Luftauslass 17 auf. Am Abzweig des Luftauslasses 17 vom Luftkanal 12 zur Trocknungskammer 9 ist eine Klappe angeordnet, die automatisch mittels einer Steuerungsanordnung gesteuert werden kann, sodass die Luft entweder zur Trocknungskamm 9 oder nach außen geblasen werden kann.

Die getrocknete, warme Luft kann die Feuchtigkeit des Trocknungsguts 2 beim Durchströmen desselben aufnehmen. Die dabei entstehende feuchte, warme feuchte Luft 4a kann dann wieder in den Luftentfeuchter 5 gesaugt werden. In diesem Fall erzeugt der Ventilator 3 somit einen geschlossenen Luftkreislauf innerhalb des Gebäudes 8.

Alternativ oder zusätzlich ist es auch möglich, die warme, feuchte Luft aus der Trocknungskammer 9 ins Freie auszublasen, zum Beispiel durch einen als Fenster ausgebildeten Luftauslass 17 des Gebäudes 8. Dabei kann zumindest ein Teil der den Luftentfeuchter 5 anströmenden Luft durch den Ventilator 3 von außerhalb des Gebäudes 8 angesaugt werden. Ein Ansaugen der Außenluft 4b kann insbesondere dann vorteilhaft sein, wenn die Außenluft 4b eine hohe Lufttemperatur, zum Beispiel von über 20°C, und/oder eine geringe Luftfeuchtigkeit, zum Beispiel von unter 45%, aufweist. Ein entsprechender Luftkanal 12 kann beispielsweise direkt unterhalb des Scheunendachs 15, insbesondere über die gesamte Länge des Gebäudes 8, verlaufen, um eine weitere Erwärmung der dem Luftleitungssystem zugeführte Außenluft 4b vor dem Entfeuchten durch Sonneneinstrahlung auf das Gebäudedach 15 zu erreichen.

Das Luftleitungssystem kann zur Steuerung des Luftstroms 4 eine oder mehrere Luftweichen und/oder Klappen, insbesondere zum selektiven Verschließen einzelner Luftkanäle 12 und/oder Luftauslässe 17, aufweisen. In Abhängigkeit der Witterung kann so z.B. zwischen einem Frischluftbetrieb und einem Kreislaufbetrieb gewechselt werden. Eine solche steuerbare Klappe ist in FIG 1 auch bei der Zusammenführung der beiden Luftkanäle 12 von der Trocknungskammer 9 und dem Gebäudedach 15 gezeigt.

Das Luftleitungssystem, insbesondere die Luftweichen und/oder Klappen, werden in bevorzugter Weise von einer Steuerungseinrichtung 16 gesteuert. Die Steuerungseinrichtung 16 kann dabei mit einer Sensoreinrichtung (nicht gezeigt) verbunden sein, die mehrere Sensoren, zum Beispiel jeweils einen außerhalb der Scheune 8 angeordneten Temperatur- und Luftfeuchtigkeitssensor aufweist. Die Steuerungseinrichtung 16 ist dann vorzugsweise dazu eingerichtet, auf Grundlage von durch die Sensoreinrichtung bereitgestellten Sensordaten das Luftleitungssystem zu steuern.

Alternativ oder zusätzlich kann die Steuerungseinrichtung 16 auch dazu eingerichtet sein, den Luftentfeuchter 5, den Wärmespeicher 6 und/oder die Wärmeeinrichtung 7, insbesondere in Abhängigkeit der Sensordaten, zu steuern. Insbesondere kann die Steuerungseinrichtung 16 dazu eingerichtet sein, das Trocknungssystem 1 im ersten Betriebsmodus oder im zweiten Betriebsmodus zu betreiben.

Im gezeigten Beispiel ist das Trocknungssystem 1 zusätzlich dazu eingerichtet, mithilfe des Luftentfeuchters 5 erzeugte Wärme an ein Heizungssystem zum Heizen von Räumen bzw. Gebäuden abzugeben bzw. diesem bereitzustellen. Zu diesem Zweck weist der Wärmespeicher 6 eine Anschlusseinrichtung 18 zum Anschluss des Heizungssystems auf. Mit anderen Worten kann der Wärmespeicher 6 über die Anschlusseinrichtung 18 in das Heizungssystem eingebunden werden. Dadurch kann im Wärmespeicher 6 gespeicherte Wärme, die nicht zum Trocknen des Trocknungsguts 2 verwendet wurde, zum Beispiel zum Heizen eines Stalls oder eines Wohnhauses auf einem Bauernhof verwendet werden. Insbesondere ist es dadurch auch möglich, den Luftentfeuchter 5 als Wärmepumpe zum Heizen der Räume bzw. Gebäude zu verwenden. Der Wärmespeicher 6 dient dabei als Wärmepuffer.

Tagsüber kann beispielsweise Wärme gewonnen und im Wärmespeicher gespeichert werden, die nachts zur Heizung eines Gebäudes oder Technikraums verwendet wird. Insbesondere kann hierzu der Luftstrom 4b durch das Gebäudedach 15 genutzt werden, sodass in das Dach eingetragene Sonnenenergie zur Heizung verwendet wird. Es ist auch möglich, die Wärme als andere Prozesswärme zu verwenden, z.B. zur Heizung von Wasser zum Betrieb einer Melkanlage. Auf diese Weise kann der Wärmespeicher 6 multifunktional genutzt werden zum Bereitstellen von Prozesswärme zum Trocken von Trocknungsgut, von Prozesswärme zum Heizen eines Gebäudes oder von Prozesswärme zum Betreiben eines anderen technischen Prozesses, wie einen Melkvorgang.

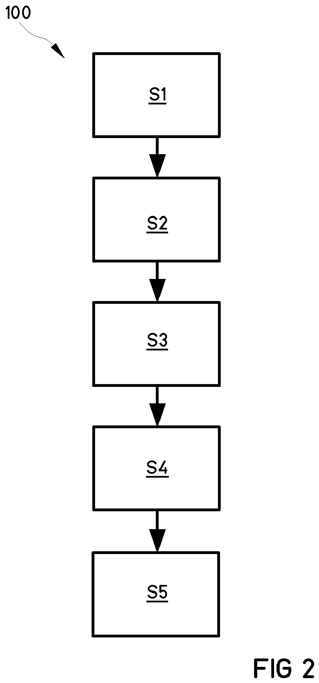

**FIG 2** zeigt ein Beispiel eines Trocknungsverfahrens 100 zum Trocknen von Trocknungsgut, insbesondere Pflanzenfasern, wie es beispielsweise mithilfe eines in FIG 1 gezeigten Trocknungssystems ausgeführt werden kann.

In einem Verfahrensschritt S1 wird ein Luftstrom, zum Beispiel mithilfe eines Ventilators, erzeugt. Zu diesem Zweck kann beispielsweise Außenluft aus der Umgebung einer Struktur, in der das Trocknungsgut zur Trocknung eingelagert wird, zum Beispiel einer Scheune oder eines Silos, angesaugt werden.

In einem weiteren Verfahrensschritt S2 wird dem erzeugten Luftstrom Feuchtigkeit entzogen, zum Beispiel indem der Luftstrom durch einen Luftentfeuchter geführt wird. Der Luftentfeuchter weist vorzugsweise ein Kühlregister auf, mit dem der Luftstrom auf eine Temperatur unterhalb des Taupunkts gekühlt wird. In einem Kondensator des Luftentfeuchters kondensiert die Flüssigkeit und kann abgeführt werden.

Die dem Luftstrom beim Abkühlen entzogene Wärme wird in einem weiteren Verfahrensschritt S3 einem Wärmespeicher zugeführt. Der Verfahrensschritt S3 kann zum Beispiel in einem ersten Betriebsmodus des in FIG 1 gezeigten Trocknungssystems ausgeführt werden. Im Verfahrensschritt S3, d. h. dem ersten Betriebsmodus, wird der Wärmespeicher somit aufgeladen.

Da die dem Luftstrom entzogene Wärme im Verfahrensschritt S3 nicht unmittelbar zur Erwärmung des Luftstroms nach dem Entfeuchten verwendet wird, eignet sich die aus dem Luftentfeuchter austretende trockene, kühle Luft nicht oder nur bedingt zur Trocknung des Trocknungsguts. Der Verfahrensschritt S3 wird deshalb in bevorzugter Weise ausgeführt, wenn noch kein Trocknungsgut in der Scheune bzw. dem Silo eingelagert ist. Alternativ oder zusätzlich wird die während des Aufladens des Wärmespeichers erzeugte trockne, kühle Luft vor Erreichen des Trocknungsguts ausgeblasen. Zum Beispiel kann die Luft durch einen Luftauslas vor einer Trocknungskammer der Struktur, in der das Trocknungsgut eingelagert ist oder wird, ausgeblasen werden.

In einem weiteren Verfahrensschritt S4, insbesondere wenn der Wärmespeicher zumindest im Wesentlichen vollständig aufgeladen ist, wird die aus dem Luftentfeuchter austretende trockene, kühle Luft mit aus dem Wärmespeicher entnommener Wärme erwärmt. Dazu kann der Luftstrom stromabwärts des Luftentfeuchter zum Beispiel durch eine Wärmeeinrichtung, beispielsweise ein mit dem Wärmespeicher verbundenes Warmwasserregister, geführt werden.

Der Verfahrensschritt S4 kann beispielsweise in einem zweiten Betriebsmodus des in FIG 1 gezeigten Trocknungssystems ausgeführt werden. Die Wärmeeinrichtung überträgt dabei die Wärme aus dem Wärmespeicher auf den Luftstrom, z.B. indem warmes Wasser aus dem Wärmespeicher durch das Warmwasserregister gepumpt wird.

Im Verfahrensschritt S4 wird der Wärmespeicher nicht weiter aufgeladen. Die dem Luftstrom beim Entfeuchten entzogene Wärme wird daher genutzt, um die aus dem Luftentfeuchter austretende Luft vorzuheizen, etwa mittels eines Heizregisters des Luftentfeuchters. Auf Grundlage des vorgeheizten Luftstroms kann die Wärmeeinrichtung besonders hohe Luftstromtemperaturen erzeugen.

Um eine unnötig komplizierte bzw. komplexe Führung des Luftstroms zu vermeiden, wird auch die im Verfahrensschritt S3, d.h. im ersten Betriebsmodus, entfeuchtete kühle Luft in bevorzugter Weise ebenfalls durch die Wärmeeinrichtung geführt. Im Verfahrensschritt S3 bzw. im ersten Betriebsmodus wird die Wärmeeinrichtung jedoch außer Betrieb genommen, z.B. vom Wärmespeicher abgekoppelt und/oder kein Wasser aus dem Wärmespeicher durch das Warmwasserregister gepumpt.

Der nach dem Verfahrensschritt S4 aus der Wärmeeinrichtung austretende Luftstrom mit trockener, warmer Luft kann in einem weiteren Verfahrensschritt S5 dem Trocknungsgut, beispielsweise einem landwirtschaftlichen Gut wie Heu, Stroh, Mais, Tierfutter und/oder dergleichen, zum Trocknen desselben zugeführt werden. Dadurch, dass im Wärmespeicher leicht eine große Wärmemenge speicherbar ist, kann der Luftstrom zur Trocknung insbesondere zu einem im Wesentlichen frei wählbaren Zeitpunkt erwärmt werden. Zum Beispiel kann die Wärme aus dem Wärmespeicher zur besonders starken Erwärmung des Luftstroms zu Beginn des Trocknungsprozesses, wenn das Trocknungsgut noch besonders feucht ist, genutzt werden.

### Bezugszeichenliste

- 1: Trocknungssystem
- 2: Trocknungsgut
- 3: Ventilator
- 4: Luftstrom
- 4a: Luft aus der Trocknungskammer
- 4b: Außenluft
- 4c: Abluft
- 5: Luftentfeuchter
- 6: Wärmespeicher
- 7: Wärmeeinrichtung
- 8: Gebäude
- 9: Trocknungskammer
- 10: Lüftungsboden
- 11: Technikraum
- 12: Luftkanal
- 13: Kühlregister
- 14: Heizregister
- 15: Gebäudedach
- 16: Steuerungsanordnung
- 17: Luftauslass
- 18: Anschlusseinrichtung

- 100: Trocknungsverfahren

- S1-S5: Verfahrensschritte

## Patentansprüche

1. Trocknungssystem (1) zum Trocknen von Trocknungsgut (2), insbesondere Pflanzenfasern, aufweisend:
- einen Ventilator (3) zur Erzeugung eines Luftstroms (4), der dem Trocknungsgut (2) zur Trocknung zuführbar ist;
- einen Luftentfeuchter (5) zum Entfeuchten des Luftstroms (4); und
- einen Wärmespeicher (6), wobei
- eine mit dem Wärmespeicher (6) gekoppelte Wärmeeinrichtung (7), die dazu eingerichtet ist, den entfeuchteten Luftstrom (4) mit aus dem Wärmespeicher (6) entnommener Wärme zu erwärmen, wobei
das Trocknungssystem (1) dazu eingerichtet ist, dem Luftstrom (4) beim Entfeuchten entzogene Wärme in einem ersten Betriebsmodus dem Wärmespeicher (6) zuzuführen und den Luftstrom (4) mit beim Entfeuchten entzogener Wärme in einem zweiten Betriebsmodus direkt vorzuwärmen und zusätzlich mit aus dem Wärmespeicher (6) entnommener Wärme zu erwärmen.

2. Trocknungssystem (1) nach einem der vorangehenden Ansprüche,
**dadurch gekennzeichnet,**
**dass** die Wärmeeinrichtung als Heizregister (14) des Luftentfeuchters (5) ausgebildet ist.

3. Trocknungssystem (1) nach Anspruch 1,
**dadurch gekennzeichnet,**
**dass** die Wärmeeinrichtung (7) zusätzlich zu einem Heizregister (14) des Luftentfeuchters (5) vorgesehen und stromabwärts des Heizregisters (14) angeordnet ist.

4. Trocknungssystem (1) nach Anspruch 3,
**dadurch gekennzeichnet,**
**dass** die Wärmeeinrichtung (7) dazu eingerichtet ist, den durch das Heizregister (14) vorgewärmten Luftstrom (4) auf mindestens 20°C, insbesondere mindestens 30°C, zu erwärmen.

5. Trocknungssystem (1) nach einem der vorangehenden Ansprüche,
**dadurch gekennzeichnet,**
**dass** die Wärmeeinrichtung (7) unmittelbar stromaufwärts des Ventilators (3) angeordnet ist.

6. Trocknungssystem (1) nach einem der vorangehenden Ansprüche,
**gekennzeichnet durch**
ein Luftleitungssystem, das dazu eingerichtet ist, die Luft aus dem von der Wärmeeinrichtung (7) erwärmten Luftstrom dem Luftentfeuchter (5) zuzuführen.

7. Trocknungssystem (1) nach Anspruch 6,
**gekennzeichnet durch**
eine Trocknungskammer (9), insbesondere für Pflanzenfasern, wobei das Luftleitungssystem dazu eingerichtet ist, den Luftstrom (4) selektiv in die Trocknungskammer (9) einzuleiten.

8. Trocknungssystem (1) nach einem der vorangehenden Ansprüche,
**gekennzeichnet durch**
eine Steuerungseinrichtung (16), die dazu eingerichtet ist, den Luftentfeuchter (5) und/oder die Wärmeeinrichtung (7) in Abhängigkeit von einer Lufttemperatur, einer Luftfeuchte und/oder einer Restfeuchte des Trocknungsguts (2) zu betreiben.

9. Trocknungssystem (1) nach einem der vorangehenden Ansprüche,
**dadurch gekennzeichnet,**
**dass** der Wärmespeicher (6) dazu eingerichtet ist, gespeicherte Wärme an ein Heizungssystem zum Heizen von Räumen abzugeben.

10. Trocknungssystem (1) nach einem der vorangehenden Ansprüche,
**gekennzeichnet**
**durch** eine zusätzliche Wärmeeinrichtung, die stromaufwärts eines Kälteregisters des Luftentfeuchters (3) angeordnet ist.

11. Trocknungsverfahren (100) aufweisend die Schritte:
- (S1) Erzeugen eines Luftstroms (4) durch einen Ventilator (7);
- (S2) Entfeuchten des Luftstroms (2) mit einem Luftentfeuchter (7) und dabei Erzeugen von Wärme;
- (S3) Speichern der Wärme in einem Wärmespeicher (6); und
- (S4) Entnehmen der Wärme aus dem Wärmespeicher (6) und Zuführen der Wärme als Prozesswärme zu einem Erwärmungsprozess,
wobei dem Luftstrom (4) beim Entfeuchten entzogene Wärme in einem ersten Betriebsmodus dem Wärmespeicher (6) zugeführt wird und der Luftstrom (4) mit beim Entfeuchten entzogener Wärme in einem zweiten Betriebsmodus direkt vorgewärmt und zusätzlich mit aus dem Wärmespeicher (6) entnommener Wärme erwärmt wird.

12. Trocknungsverfahren (100) nach Anspruch 11 zum Trocknen von Trocknungsgut (2), insbesondere Pflanzenfasern;
**dadurch gekennzeichnet,**
- **dass** die Prozesswärme zum Erwärmen von entfeuchteter Luft aus dem Luftentfeuchter verwendet wird und
- der Erwärmungsprozess das Trocknen des Trocknungsguts ist.

## Claims

1. Drying system (1) for drying material for drying (2), in particular vegetable fibres, having:
- a fan (3) for generating an air stream (4), which is able to be supplied to the material for drying (2) for drying purposes;
- an air dehumidifier (5) for dehumidifying the air stream (4); and
- a heat store (6),
wherein
- a heating device (7) which is coupled to the heat store (6) and is configured to heat the dehumidified air stream (4) by way of heat removed from the heat store (6), wherein
the drying system (1) is configured such that, in a first operating mode, it supplies heat extracted during dehumidification from the air stream (4) to the heat store (6) and, in a second operating mode, it directly preheats the air stream (4) by way of heat extracted during the dehumidification and it additionally heats said air stream by way of heat removed from the heat store (6).

2. Drying system (1) according to one of the preceding claims,
**characterized**
**in that** the heating device is in the form of a heating register (14) of the air dehumidifier (5).

3. Drying system (1) according to Claim 1,
**characterized**
**in that** the heating device (7) is provided in addition to a heating register (14) of the air dehumidifier (5) and is arranged downstream of the heating register (14).

4. Drying system (1) according to Claim 3,
**characterized**
**in that** the heating device (7) is configured to heat to at least 20°C, in particular at least 30°C, the air stream (4) preheated by the heating register (14) .

5. Drying system (1) according to one of the preceding claims,
**characterized**
**in that** the heating device (7) is arranged directly upstream of the fan (3).

6. Drying system (1) according to one of the preceding claims,
**characterized by**
an air-directing system which is configured to supply the air from the air stream heated by the heating device (7) to the air dehumidifier (5).

7. Drying system (1) according to Claim 6,
**characterized by**
a drying chamber (9), in particular for vegetable fibres, wherein the air-directing system is configured to selectively introduce the air stream (4) into the drying chamber (9).

8. Drying system (1) according to one of the preceding claims,
**characterized by**
a control device (16) which is configured to operate the air dehumidifier (5) and/or the heating device (7) in a manner dependent on an air temperature, an air humidity and/or a residual moisture of the material for drying (2).

9. Drying system (1) according to one of the preceding claims,
**characterized**
**in that** the heat store (6) is configured to release stored heat to a heating system for heating rooms.

10. Drying system (1) according to one of the preceding claims,
**characterized**
**by** an additional heating device which is arranged upstream of a refrigeration register of the air dehumidifier (3).

11. Drying method (100) comprising the steps of:
- (S1) generating an air stream (4) by way of a fan (7);
- (S2) dehumidifying the air stream (2) by way of an air dehumidifier (7) and generating heat in the process;
- (S3) storing the heat in a heat store (6); and
- (S4) removing the heat from the heat store (6) and supplying the heat as process heat to a heating process,
wherein,
in a first operating mode, heat extracted during dehumidification from the air stream (4) is supplied to the heat store (6) and, in a second operating mode, the air stream (4) is directly preheated by way of heat extracted during the dehumidification and said air stream is additionally heated by way of heat removed from the heat store (6).

12. Drying method (100) according to Claim 11 for drying material for drying (2), in particular vegetable fibres,
**characterized**
- **in that** use is made of the process heat for heating dehumidified air from the air dehumidifier, and
- the heating process is the drying of the material for drying.

## Revendications

1. Système de séchage (1) pour le séchage d'un produit à sécher (2), notamment de fibres végétales, présentant :
- un ventilateur (3) pour la production d'un courant d'air (4) qui peut être amené au produit à sécher (2) pour le séchage ;
- un déshumidificateur d'air (5) pour la déshumidification du courant d'air (4) ; et
- un réservoir de chaleur (6),
dans lequel
- un dispositif de chauffage (7) couplé au réservoir de chaleur (6), qui est adapté pour chauffer le courant d'air déshumidifié (4) avec de la chaleur extraite du réservoir de chaleur (6),
le système de séchage (1) étant adapté pour amener la chaleur extraite du courant d'air (4) lors de la déshumidification au réservoir de chaleur (6) dans un premier mode de fonctionnement et pour préchauffer directement le courant d'air (4) avec la chaleur extraite lors de la déshumidification dans un deuxième mode de fonctionnement et pour le chauffer en plus avec de la chaleur extraite du réservoir de chaleur (6).

2. Système de séchage (1) selon l'une quelconque des revendications précédentes,
**caractérisé en ce que**
le dispositif de chauffage est configuré sous forme de registre de chaleur (14) du déshumidificateur d'air (5).

3. Système de séchage (1) selon la revendication 1,
**caractérisé en ce que**
le dispositif de chauffage (7) est prévu en plus d'un registre de chaleur (14) du déshumidificateur d'air (5) et est agencé en aval du registre de chaleur (14).

4. Système de séchage (1) selon la revendication 3,
**caractérisé en ce que**
le dispositif de chauffage (7) est adapté pour chauffer le courant d'air (4) préchauffé par le registre de chaleur (14) à au moins 20 °C, notamment à au moins 30 °C.

5. Système de séchage (1) selon l'une quelconque des revendications précédentes,
**caractérisé en ce que**
le dispositif de chauffage (7) est agencé directement en amont du ventilateur (3).

6. Système de séchage (1) selon l'une quelconque des revendications précédentes,
**caractérisé par**
un système de conduite d'air qui est adapté pour amener l'air provenant du courant d'air chauffé par le dispositif de chauffage (7) au déshumidificateur d'air (5).

7. Système de séchage (1) selon la revendication 6,
**caractérisé par**
une chambre de séchage (9), notamment pour des fibres végétales, le système de conduite d'air étant adapté pour introduire sélectivement le courant d'air (4) dans la chambre de séchage (9).

8. Système de séchage (1) selon l'une quelconque des revendications précédentes,
**caractérisé par**
un dispositif de commande (16) qui est adapté pour faire fonctionner le déshumidificateur d'air (5) et/ou le dispositif de chauffage (7) en fonction d'une température de l'air, d'une humidité de l'air et/ou d'une humidité résiduelle du produit à sécher (2).

9. Système de séchage (1) selon l'une quelconque des revendications précédentes,
**caractérisé en ce que**
le réservoir de chaleur (6) est adapté pour fournir de la chaleur stockée à un système de chauffage pour chauffer des pièces.

10. Système de séchage (1) selon l'une quelconque des revendications précédentes,
**caractérisé par**
un dispositif de chauffage supplémentaire, qui est agencé en amont d'un registre de froid du déshumidificateur d'air (3).

11. Procédé de séchage (100) présentant les étapes suivantes :
- (51) la génération d'un courant d'air (4) par un ventilateur (7) ;
- (S2) la déshumidification du courant d'air (2) avec un déshumidificateur d'air (7) et ainsi la production de chaleur ;
- (S3) le stockage de la chaleur dans un réservoir de chaleur (6) ; et
- (S4) l'extraction de la chaleur du réservoir de chaleur (6) et l'amenée de la chaleur en tant que chaleur de processus à un processus de chauffage,
la chaleur extraite du courant d'air (4) lors de la déshumidification étant amenée au réservoir de chaleur (6) dans un premier mode de fonctionnement et le courant d'air (4) étant préchauffé directement avec la chaleur extraite lors de la déshumidification dans un deuxième mode de fonctionnement et étant chauffé en plus avec la chaleur extraite du réservoir de chaleur (6).

12. Procédé de séchage (100) selon la revendication 11 pour le séchage d'un produit à sécher (2), notamment de fibres végétales ;
**caractérisé en ce que**
- la chaleur de processus est utilisée pour chauffer l'air déshumidifié provenant du déshumidificateur d'air et
- le processus de chauffage est le séchage du produit à sécher.
